# EUROPEAN PATENT SPECIFICATION

(11) **EP 1 750 939 B1**
(45) Date of publication and mention of the grant of the patent: **02.04.2008**
(21) Application number: 05782672.9
(22) Date of filing: 22.04.2005
(51) Int. Cl.: B32B 27/18

(54) **COLOR STABLE MULTILAYER ARTICLES**
FARBSTABILE MEHRSCHICHTIGE ARTIKEL
ARTICLES MULTICOUCHES DE COULEUR STABLE

(30) Priority: 18.05.2004 US 849108
(43) Date of publication of application: 14.02.2007
(73) Proprietor: GENERAL ELECTRIC COMPANY, Schenectady, NY 12345 (US)
(72) Inventor: GRAF, John, Frederick, Ballston Lake, NY 12019 (US); PICKETT, James, Edward, Schenectady, NY 12304 (US); ZHOU, Hongyi, Niskayuna, NY 12309 (US); RICE, Steven, Thomas, Scotia, NY 12302 (US)
(74) Representative: Carpintero Lopez, Francisco
(86) International application number: PCT/US2005/013718
(87) International publication number: WO 2005/120828

(56) References cited:
- US-A1- 2001 021 734
- US-A1- 2001 031 804
- US-A1- 2002 025 999
- US-B1- 6 514 594

## Description

### BACKGROUND OF THE INVENTION

This invention relates to color stability, and more particularly to improvement of the color stability of compositions containing arylate-comprising polymers.

Photoyellowing of polymers over time is a known phenomenon which is undesirable for aesthetic reasons. It is generally the result of absorption of ultraviolet (UV) radiation by the polymer, said radiation causing photochemical reactions which typically form yellow materials. Such base polymers as polycarbonates are particularly sensitive to photoyellowing. This can severely impede the fabrication of light-colored articles such as white or blue articles, since the yellowing tendency can obliterate the white or blue coloring with the passage of time. Alternatively, a higher proportion of the desired colorant can be introduced during fabrication but there will still be a change in appearance over time.

A recent development which can minimize photoyellowing is the use of a polymer comprising arylate structural units, for example one with structural units derived from resorcinol and a mixture of isophthalic and terephthalic acids, which may be blended with a base polymer, may form a copolymer therewith or may constitute a separate, external layer thereover. Such polyarylates undergo a Fries rearrangement to form hydroxybenzophenone moieties, which serve as ultraviolet absorbers and protect the base polymer from photoyellowing.

However, the polyarylates themselves may develop a yellow color with the passage of time, dissipating to at least some extent the benefits of UV absorption. This is because, while they absorb primarily in the range between about 360 nanometers and about 390 nanometers (nm) in the near ultraviolet portion of the spectrum, their absorption extends a small distance into the visible area, resulting in the yellow color development.

One known method of compensating for color development is to introduce into the polymer a photobleachable compound which absorbs in the same region of the visible spectrum as the hydroxybenzophenone moieties. Yellow dyes generally absorb in this range. Such a dye, if photobleachable, turns colorless at approximately the same rate as that of photoyellowing and the overall color of the polymer remains fairly constant. This method is disclosed in various patents, of which examples in the polyphenylene ether art include U.S. Pat. Nos. 4,493,915 and 5,478,878.

Photobleachable compounds which compensate for color development include amino cinnamic compounds. The amino cinnamic compounds strongly absorb radiation in the region between about 360 nm and about 390 nm and tail into the visible region. When the amino cinnamic compounds are added to polyarylates, they match the absorption of the hydroxybenzophenone moieties formed in the polyarylate without initially imparting excessive yellow color to the resinous composition. This method is disclosed in various patents, of which examples include U.S. Pat. Nos. 6,410,620; 6,414,058; and 6,417,253.

Unfortunately, the addition of stabilizers and higher concentrations of pigments and dyes to polymers does not work well for making whites in materials that have intense yellowing that is concentrated in the first 50 microns of the material. Even at the highest usable concentrations of white pigments, a significant amount of light passes through the first 50 microns of the material. Increasing the pigment loading to light from seeing the yellow material that is concentrated in the first 50 microns is ineffective. Thus, new methods for color suppression continue to be sought in the art.

### BRIEF DESCRIPTION OF THE INVENTION

The present invention provides a multilayer article comprising:
a substrate layer including at least one white scattering pigment and optionally, at least one stable chromatic colorant, and
at least one top layer including at least one thermoplastic polymer comprising structural units derived from at least one 1,3-dihydroxybenzene and at least one organodicarboxylic acid, at least one yellow colorant selected from the group consisting of solvent yellow 72,7,8-dimethylalloxazine and combinations thereof and optionally, at least one stable chromatic colorant with the proviso that at least one layer includes the stable chromatic colorant.

The present invention further provides a method for preparing a multilayer article comprising
providing a substrate layer comprising at least one white scattering pigment and optionally, at least one stable chromatic colorant, and
applying at least one top layer to the substrate layer wherein the top layer includes at least one thermoplastic polymer comprising structural units derived from at least one 1,3-dihydroxybenzene and at least one organodicarboxylic acid, at least one yellow colorant selected from the group consisting of solvent yellow 72, 7,8-dimethylalloxazine and combinations thereof, and optionally, at least one stable chromatic colorant with the proviso that at least one layer includes the chromatic colorant.

### DETAILED DESCRIPTION OF THE DRAWINGS

Figure 1 is a graphical representation of the change in color values and the ΔE color shift versus exposure for a multilayer article containing titanium dioxide.

Figure 2 is a graphical representation of the change in color values and the ΔE color shift versus exposure for a multilayer article with unstable yellow colorant in the substrate layer.

Figure 3 is a graphical representation of the change in color values and the ΔE color shift versus exposure for a multilayer article with unstable yellow colorant in the top layer.

Figure 4 is a graphical representation of the ΔE color shift versus exposure for multilayer articles with unstable yellow colorant in the top layer and with unstable yellow colorant in the substrate layer.

### DETAILED DESCRIPTION OF THE INVENTION

As used herein the term polymer comprises homopolymers, copolymers, interpolymers, higher order copolymers, and higher order interpolymers, but is not limited to these specific genera of polymeric materials.

The present invention comprises multilayer articles comprising at least two layers. In one embodiment multilayer articles of the present invention are those comprising a substrate layer which includes at least one white scattering pigment and optionally, at least one stable chromatic colorant and at least one top layer which includes at least one unstable yellow colorant and optionally, at least one stable chromatic colorant with the proviso that at least one layer includes the stable chromatic colorant. Preferably, the at least one stable chromatic colorant is present in the substrate layer.

Yellowing of an article typically occurs mostly at a depth of the first 50 microns of an article. In the present invention, greater lightness of white material of the multilayer article is achieved by dividing the white scattering pigment into the substrate layer and the unstable yellow colorant into the top layer. "Lightness of white material" as used herein is measured by CIE L*a*b* where the parameters L*, a* and b* respectively represent the light intensity (100=white light), yellow-blue hue (positive is yellow) and red-green hue (positive is red). Preferably, L* is greater than 80, and more preferably, L* is greater than 85.

The top layer of the present invention is a thermoplastic polymer that includes at least one unstable yellow colorant selected from the group consisting of solvent yellow 72, 7,8-dimethylalloxazine and combinations thereof and optionally, at least one stable chromatic colorant. The colorant may be a pigment or a dye, and either an inorganic or an organic colorant may be used, or these may be used together. "Unstable yellow colorant" as used herein refers to at least one yellow colorant that turns colorless at approximately the same rate the polymeric article turns yellow such that the color of the multilayer article remains substantially constant. Typically, the at least one unstable yellow colorant has a yellow index half life in a range between about 100 kilojoules per meter squared per nanometer (KJ/m²/nm) and about 350 KJ/m²/nm at 340 nanometer light exposure when exposed in a Xenon arc artificial weathering device. A "stable colorant" as used herein refers to a colorant or combination of colorants with a half-life of the maximum absorption measured in a range between about 400 nanometers and about 700 nanometers greater than 3000 KJ/m²/nm at 340 nanometer light exposure when exposed in a Xenon arc artificial weathering device. "Substantially constant color" as used herein refers to a ΔE shift less than 3 and more preferably, less than 2 wherein ΔE varies directly with the change in color of the sample and is the square root of the expression (L*₁ -L*₀)² +(a*₁ -a*₀)² +(b*₁ -b*₀)², where L*, a*, and b* are defined above. L*₁, a*₁ and b*₁ are the values after light exposure and L*₀, a*₀ and b*₀ are the initial values before light exposure. The top layer can contain other optional additives and stabilizers such as UV absorbers, antioxidants, flow promoters, slip agents, processing aids, anti-microbial agents, and the like. Lists of such additives can be found in "Plastics Additive Handbook, 5th Edition," H.Zweifel, editor, Hanser Publishers (2001).

Examples of colorants include titanium dioxide, iron oxide red, and other oxides, alumina white and other hydroxides, zinc sulfide and other sulfides, selenides, Prussian blue and other ferrocyanides, zinc chromate, molybdenum red, and other chromates, barium sulfate and other sulfates, calcium carbonate and other carbonates, ultramarine blue and other silicates, manganese violet and other phosphates, carbon black and other carbons, and bronze powder, aluminum powder, and other metal powder colorants.

Further examples of colorants include, but are not limited to, 7,8-dimethylalloxazine, Solvent Yellow 72, Solvent Yellow 93, Solvent Yellow 163, Solvent Yellow 114/Disperse Yellow 54, Solvent Violet 36, Solvent Violet 13, Solvent Red 169, Solvent Red 195, Solvent Red 179, Solvent Red 135, Solvent Orange 60, Solvent Green 3, Solvent Green 28, Solvent Blue 97, Solvent Blue 104, Solvent Blue 104, Solvent Blue 101, Macrolex Yellow E2R, Disperse Yellow 201, Disperse Red 60, Diaresin Red K, Colorplast Red LB, Pigment Yellow 183, Pigment Yellow 138, Pigment Yellow 110, Pigment Violet 29, Pigment Violet 15, Pigment Red 181, Pigment Red 209, Pigment Red 209, Pigment Red 202, Pigment Red 178, Pigment Red 149, Pigment Red 122, Pigment Orange 68, Pigment Green 7, Pigment Green 36, Pigment Blue 60, Pigment Blue 15:1, Pigment Blue 15:4, Pigment Blue 15:3, Pigment Yellow 24, Pigment Yellow 53, Pigment Yellow 184, Pigment Yellow 119, Pigment White 6, Pigment Red 101, Pigment Green 50, Pigment Green 17, Pigment Brown 24, Pigment Blue 29, Pigment Blue 28, Pigment Blue 36, Pigment Blue 60, Pigment Black 7, Lead Molybdates, Lead Chromates, Cerium Sulfides, Cadmium Sulfoselenide, and Cadmium Sulfide. Any colorant or combinations of colorants known in the art can be used in the present invention.

The at least one unstable yellow colorant is Solvent Yellow 72, 7,8-dimethylalloxazine, or combinations thereof. Preferably, the at least one stable chromatic colorant is Pigment Blue 15:1, Pigment Blue 15:4, Pigment Blue 28, Pigment Blue 29, Pigment Blue 36, Pigment Blue 60, Pigment Green 36, Pigment Green 50, Pigment Green 7, Pigment Violet 15, Pigment Yellow 138, Pigment Yellow 53, Pigment Yellow 183, Pigment Yellow 24, Solvent Blue 97, Solvent Green 28, Solvent Green 3, Solvent Orange 60, Pigment Red 101, Pigment Red 178, Pigment Red 181, Solvent Red 135, Solvent Red 169, Solvent Violet 13, Solvent Violet 36, Solvent Yellow 163, Solvent Yellow 93, Pigment Black 7, or combinations thereof.

The colorant is typically used in an amount in a range between about 1x10⁻⁶ and about 5 weight parts, and preferably in a range between about 1x10⁻⁵ and about 3 weight parts, and even more preferably in a range between about 1x10⁻⁵ and about 1 weight part, per 100 weight parts of the polymer of the layer in which the colorant is contained. The formation of the polymeric compositions of the present invention may be effected by art-recognized blending techniques. These include melt blending and solution blending.

The thermoplastic polymer of the top layer comprises structural units derived from at least one 1,3-dihydroxybenzene and at least one organodicarboxylic acid. Suitable polymers for this purpose, specifically arylate-comprising polymers, are disclosed for example in commonly owned U.S. Pat. No. 5,916,997, the disclosure of which is incorporated by reference herein. Arylate-comprising polymers having a glass transition temperature of at least about 80°C and no crystalline melting temperature, i.e., those that are amorphous, are preferred.

In one embodiment of the present invention, the polymer comprising a polyarylate is one with structural units derived from a 1,3-dihydroxybenzene and either isophthalic acid or terephthalic acid or a mixture thereof comprising structural units of formula I 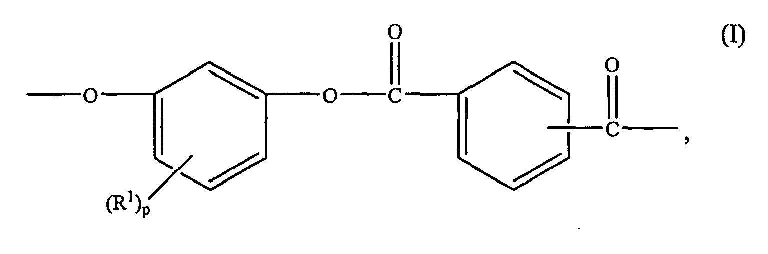 wherein each R¹ is a substituent, especially halo or C₁₋₁₂ alkyl, and p is 0-3, optionally in combination with structural units of formula II 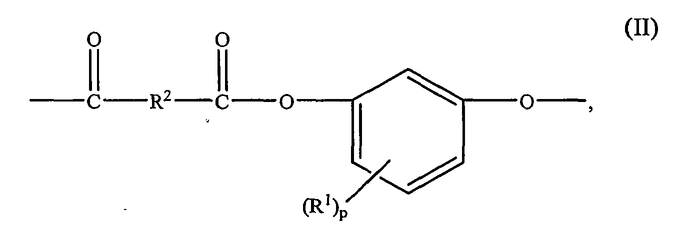 wherein R¹ and p are as previously defined and R² is a divalent C₃₋₂₂ aliphatic, alicyclic or mixed aliphatic-alicyclic radical. Moieties represented by R² are often referred to as "soft block" units.

It is within the scope of the invention for other acid groups, such as those derived from aliphatic dicarboxylic acids such as succinic acid, adipic acid or cyclohexane-1,4-dicarboxylic acid, or from other aromatic dicarboxylic acids such as 2,6-naphthalenedicarboxylic acid, to be present, preferably in amounts no greater than about 30 mole percent. Most typically, however, the top layer may consist of units of formula I, optionally in combination with units of formula II.

The units of formula I contain a resorcinol or substituted resorcinol moiety in which any R¹ groups are preferably C₁₋₄ alkyl; i.e., methyl, ethyl, propyl or butyl. They are preferably primary or secondary groups, with methyl being more preferred. The most preferred moieties are resorcinol moieties, in which p is zero, although moieties in which p is 1 are also excellent with respect to the invention.

Said 1,3-dihydroxybenzene moieties are bound to one or more types of organodicarboxylic acid moieties, typically aromatic organodicarboxylic acid moieties which may be monocyclic, e.g., isophthalate or terephthalate, or polycyclic, e.g., naphthalenedicarboxylate. Preferably, the aromatic dicarboxylic acid moieties are isophthalate or terephthalate or a mixture thereof. Either or both of said moieties may be present. For the most part, both are present in a molar ratio of isophthalate to terephthalate in the range of between about 0.25:1 and about 4.0:1, preferably in the range of between about 0.4:1 and about 2.5:1, more preferably in the range of between about 0.67:1 and about 1.5:1, and most preferably in the range of between about 0.9:1 and about 1.1:1.

In the optional soft block units of formula II, resorcinol or substituted resorcinol moieties are again present in ester-forming combination with R² which is a divalent C₃₋₂₂ aliphatic, alicyclic or mixed aliphatic-alicyclic radical. Preferably, R² is a C₃₋₂₂ straight chain alkylene, C₃₋₁₂ branched alkylene, or C₄₋₁₂ cyclo- or bicycloalkylene group. More preferably, R² is aliphatic and especially C₈₋₁₂ straight chain aliphatic.

It is usually found that the arylate-comprising polymers most easily prepared, especially by interfacial methods, consist of units of formula I and especially structural units derived from resorcinol in combination with structural units derived from isophthalic acid and terephthalic acid units (sometimes referred to herein as resorcinol isophthalate/terephthalate) in a molar ratio in the range of between about 0.25:1 and about 4.0:1, preferably in the range of between about 0.4:1 and about 2.5:1, more preferably in the range of between about 0.67:1 and about 1.5:1, and most preferably in the range of between about 0.9:1 and about 1.1:1. When that is the case, the presence of soft block units of formula II is usually unnecessary. If the ratio of units of formula I is outside this range, and especially when they are exclusively iso- or terephthalate, the presence of soft block units may be preferred to facilitate interfacial preparation. A particularly preferred arylate-comprising polymer containing soft block units is one consisting essentially of resorcinol isophthalate and resorcinol sebacate units in a molar ratio in the range of between about 8.5:1.5 and about 9.5:0.5.

Arylate-comprising polymers useful as polymers for the top layer may be prepared by conventional esterification reactions which may be conducted interfacially, in solution, in the melt or under solid state conditions, all of which are known in the art. Typical interfacial preparation conditions are described for example in commonly owned U.S. Pat. No. 5,916,997, the disclosure of which is incorporated by reference herein.

Also useful as polymers for the top layer are the block copolyestercarbonates disclosed and claimed in copending, commonly owned applications Ser. No. 09/368,706 and Ser. No. 09/416,529, the disclosures of which are also incorporated by reference herein. They include block copolymers comprising polyarylate structural units derived from a 1,3-dihydroxybenzene and either isophthalic acid or terephthalic acid or a mixture thereof in combination with carbonate structural units and having the formula 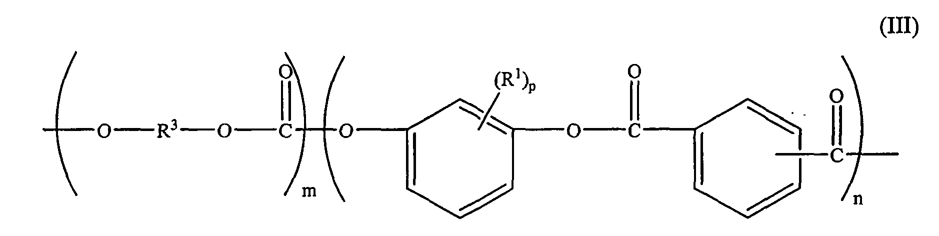 wherein R¹ and p are as previously defined, each R³ is independently a divalent organic radical, m is at least 1 and n is at least about 4. Preferably n is at least about 10, more preferably at least about 20 and most preferably about 30-150. Preferably m is at least about 3, more preferably at least about 10 and most preferably about 20-200. In especially preferred embodiments m is between about 20 and 50.

The arylate blocks contain structural units comprising 1,3-dihydroxybenzene moieties which may be unsubstituted or substituted. Alkyl substituents, if present, are preferably straight-chain or branched alkyl groups, and are most often located in the ortho position to both oxygen atoms although other ring locations are contemplated.

Suitable C₁₋₁₂ alkyl groups include methyl, ethyl, n-propyl, isopropyl, butyl, iso-butyl, t-butyl, nonyl, decyl, and aryl-substituted alkyl, including benzyl, with methyl being particularly preferred. Suitable halogen substituents are bromo, chloro, and fluoro. 1,3-Dihydroxybenzene moieties containing a mixture of alkyl and halogen substituents are also suitable. The value for p may be 0-3, preferably 0-2, and more preferably 0-1. A preferred 1,3-dihydroxybenzene moiety is 2-methylresorcinol. The most preferred 1,3-dihydroxybenzene moiety is unsubstituted resorcinol in which p is zero. Polymers containing mixtures of 1,3-dihydroxybenzene moieties, such as a mixture of unsubstituted resorcinol with 2-methylresorcinol are also contemplated.

In the arylate structural units said 1,3-dihydroxybenzene moieties are bound to aromatic dicarboxylic acid moieties which may be monocyclic moieties, such as isophthalate or terephthalate or their chlorine-substituted derivatives; or polycyclic moieties, such as biphenyl dicarboxylate, diphenylether dicarboxylate, diphenylsulfone dicarboxylate, diphenylketone dicarboxylate, diphenylsulfide dicarboxylate, or naphthalenedicarboxylate, preferably naphthalene-2,6-dicarboxylate; or mixtures of monocyclic and/or polycyclic aromatic dicarboxylates. Preferably, the aromatic dicarboxylic acid moieties are isophthalate and/or terephthalate. Either or both of said moieties may be present. For the most part, both are present in a molar ratio of isophthalate to terephthalate in the range of between about 0.25:1 and about 4.0:1. When the isophthalate to terephthalate ratio is greater than about 4.0:1, then unacceptable levels of cyclic oligomer may form. When the isophthalate to terephthalate ratio is less than about 0.25:1, then unacceptable levels of insoluble polymer may form. Preferably the molar ratio of isophthalate to terephthalate is in a range of between about 0.4:1 and about 2.5:1, and more preferably in a range between about 0.67:1 and about 1.5:1, m is at least about 10, and n is at least about 4. Soft block moieties corresponding to formula II may also be present.

In the organic carbonate blocks, each R³ is independently a divalent organic radical. Preferably, said radical comprises at least one dihydroxy-substituted aromatic hydrocarbon, and at least about 60 percent of the total number of R³ groups in the polymer are aromatic organic radicals and the balance thereof are aliphatic, alicyclic, or aromatic radicals. Suitable R³ radicals include m-phenylene, p-phenylene, 4,4'-biphenylene, 4,4'-bi(3,5-dimethyl)-phenylene, 2,2-bis(4-phenylene)propane, 6,6'-(3,3,3',3'-tetramethyl- 1,1'-spirobi[1H-indan]) and similar radicals such as those which correspond to the dihydroxy-substituted aromatic hydrocarbons disclosed by name or formula (generic or specific) in U.S. Pat. No. 4,217,438, which is incorporated herein by reference. A particularly preferred divalent organic radical is 2,2-bis(p-phenylene)isopropylidene and the dihydroxy-substituted aromatic hydrocarbon corresponding thereto is commonly known as bisphenol A (BPA).

It is believed that the arylate-comprising polymers of the top layer undergo thermally or photochemically induced Fries rearrangement of arylate blocks to yield o-hydroxybenzophenone moieties or analogs thereof which serve as stabilizers to UV radiation. More particularly, at least a portion of arylate chain members can rearrange to yield chain members with at least one hydroxy group ortho to at least one ketone group. Such rearranged chain members are typically o-hydroxybenzophenone-type chain members and typically comprise one or more of the following structural moieties of formulas IV, V, and VI: 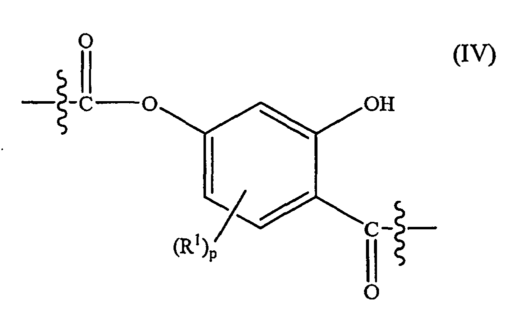 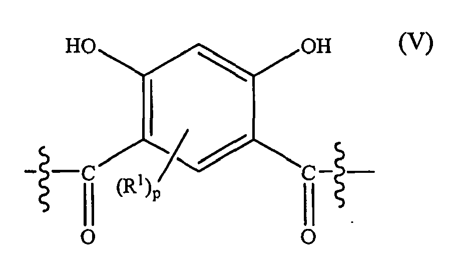 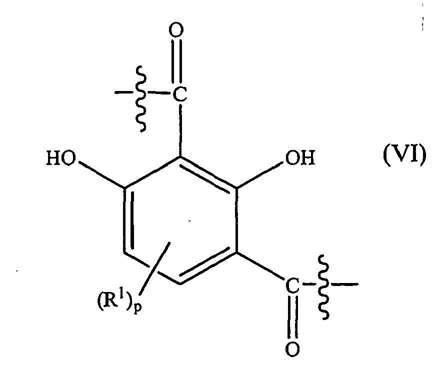 wherein R¹ and p are as previously defined. Thus, in one of its embodiments the top layer of the present invention comprises arylate-comprising polymers, at least a portion of which structural units have undergone Fries rearrangement. Fries rearrangement typically gives polymer with structural units represented by a combination of Formulas VII and VIII, 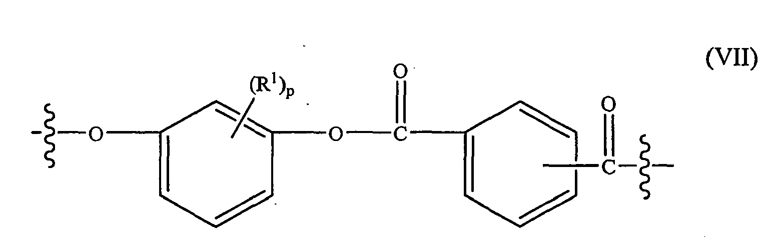 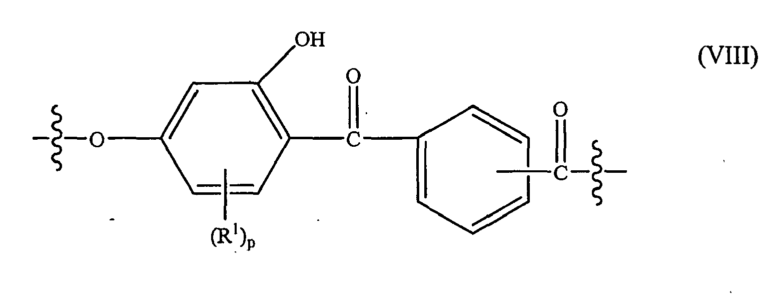 wherein R¹ and p are as previously defined and wherein the molar ratio of structural units represented by Formula VII to structural units represented by Formula VIII is in the range of between about 99:1 and about 1:1, and preferably in the range of between about 99:1 and about 80:20. Although iso- and terephthalate units are illustrated in

Formulas VII and VIII, the dicarboxylic acid residues in the arylate residues may be derived from any suitable dicarboxylic acid residue, as defined hereinabove, or mixture of suitable dicarboxylic acid residues. In preferred embodiments of the present invention, p in both Formulas VII and VIII is zero and the arylate blocks comprise dicarboxylic acid residues derived from a mixture of iso- and terephthalic acid residues. It is also contemplated to introduce moieties of the types illustrated in Formulas IV, V, and VI via synthesis and polymerization of appropriate monomers in arylate-comprising polymers.

In a further embodiment of the present invention, the top layer comprises compositions containing copolyestercarbonates containing structural units comprising those shown in Formula IX: 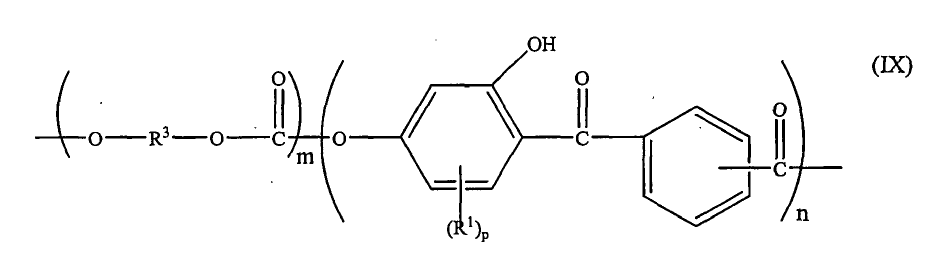 wherein R¹, R³, p, m, and n are as previously defined.

Within the context of the present invention it should be understood that any top layer comprising resorcinol arylate polyester chain members will also include polymer comprising o-hydroxy-benzophenone or analogous chain members resulting from Fries rearrangement of said resorcinol arylate chain members, for example after exposure of said top layer to UV-light. Typically, a preponderance of polymer comprising o-hydroxy-benzophenone or analogous chain members will be on that side or sides of said top layer exposed to UV-light and will overlay in a contiguous superposed layer or layers the polymer comprising unrearranged resorcinol arylate chain members. If it is worn away or otherwise removed, polymer comprising o-hydroxybenzophenone or analogous chain members is capable of regenerating or renewing itself from the resorcinol arylate-containing layer or layers, thus providing continuous protection for any UV-light sensitive layers.

It is also within the scope of the invention for other polymers to be present which are miscible in at least some proportions with the polymer top layer comprising polymer that includes structural units derived from at least one 1,3-dihydroxybenzene and at least one organodicarboxylic acid. Illustrative examples of at least partially miscible polymers include polyetherimide and polyesters such as poly(1,4-butylene terephthalate) PBT, poly(ethylene terephthalate) PET, poly(trimethylene terephthalate) PTT, poly(ethylene naphthalate) PEN, poly(butylene naphthalate) PBN, poly(cyclohexanedimethanol-co-ethylene terephthalate) PETG, poly(1,4-cyclohexanedimethyl-1,4-cyclohexanedicarboxylate) PCCD, and bisphenol A polyarylate. Preferably, a top layer polymer consists essentially the composition of the invention comprising polymer comprising structural units derived from at least one 1,3-dihydroxybenzene and at least one organodicarboxylic acid.

The multilayer article of the present invention includes a substrate layer. The substrate layer includes an effective amount of a white scattering pigment and optionally, at least one stable chromatic colorant. An "effective amount of scattering pigments" as used herein refers to an amount of white scattering pigment that achieves a white color. Typically, the scattering pigment is present in a range between about 0.1% by weight and about 10% by weight.of the total weight of the substrate layer. Exemplary white scattering pigments include any white scattering pigments known in the art such as titanium dioxide, barium sulfate, antimony oxide, calcium carbonate, zinc oxide, zinc sulfide, aluminum hydroxide, magnesium carbonate, mica, talc, quartz, or combinations thereof. Preferably, the scattering pigment is titanium dioxide. Exemplary stable chromatic colorants are those described above.

The substrate layer is a polymeric material such as at least one thermoplastic polymer, whether addition or condensation prepared. Condensation polymers include, but are not limited to, polycarbonates, particularly aromatic polycarbonates, polyphenylene ethers, polyetherimides, polyetherketones, polyetheretherketones, polyesters and polyestercarbonates (same or different from those that may be employed for the top layer, as defined hereinafter), and polyamides. Polycarbonates and polyesters are frequently preferred.

Suitable polycarbonates include homopolycarbonates comprising structural units of the type described for the organic carbonate blocks in the copolyestercarbonates of the invention. The most preferred polycarbonates are bisphenol A homo- and copolycarbonates. Preferably, the weight average molecular weight of the initial polycarbonate is in the range of between about 5,000 and about 100,000; more preferably, in the range of between about 25,000 and about 65,000.

The polycarbonate substrate may also be a copolyestercarbonate (different from that copolyestercarbonate employed for the top layer as defined hereinafter). Such copolymers typically comprise, in addition to the organic carbonate units, ester units such as isophthalate and/or terephthalate. Copolyestercarbonates which find use in the instant invention and the methods for their preparation are well known in the art as disclosed in, for example, U.S. Pat. Nos. 3,030,331; 3,169,121; 3,207,814; 4,194,038; 4,156,069; 4,238,596; 4,238,597; 4,487,896; and 4,506,065.

Polyester substrates include, but are not limited to, poly(ethylene terephthalate), poly(1,4-butylene terephthalate), poly(trimethylene terephthalate), poly(ethylene naphthalate), poly(butylene naphthalate), poly(cyclohexanedimethanol terephthalate), poly(cyclohexanedimethanol-co-ethylene terephthalate), and poly(1,4-cyclohexanedimethyl-1,4-cyclohexanedicarboxylate).

Suitable addition polymer substrates include homo- and copolymeric aliphatic olefin and functionalized olefin polymers such as polyethylene, polypropylene, poly(vinyl chloride), poly(vinyl chloride-co-vinylidene chloride), poly(vinyl fluoride), poly(vinylidene fluoride), poly(vinyl acetate), poly(vinyl alcohol), poly(vinyl butyral), poly(acrylonitrile), acrylic polymers such as those of (meth)acrylamides or of alkyl (meth)acrylates such as poly(methyl methacrylate) ("PMMA"), and polymers of alkenylaromatic compounds such as polystyrenes, including syndiotactic polystyrene. The preferred addition polymers for many purposes are polystyrenes and especially the so-called ABS and ASA copolymers, which may contain thermoplastic, non-elastomeric styrene-acrylonitrile side chains grafted on an elastomeric base polymer of butadiene and alkyl acrylate, respectively.

Blends of any of the foregoing types and species of polymers may also be employed as substrates. Typical blends include, but are not limited to, those comprising PC/ABS, PC/ASA, PC/PBT, PC/PET, PC/polyetherimide, PC/polysulfone, polyester/polyetherimide, PMMA/acrylic rubber, polyphenylene ether-polystyrene, polyphenylene ether-polyamide or polyphenylene ether-polyester. Although the substrate layer may incorporate other thermoplastic polymers, the above-described polycarbonates and/or addition polymers still more preferably constitute the major proportion thereof.

The substrate layer in the multilayer articles of this invention may also comprise at least one of any thermoset polymer. Suitable thermoset polymer substrates include, but are not limited to, those derived from epoxys, cyanate esters, unsaturated polyesters, diallylphthalate, acrylics, alkyds, phenol-formaldehyde, novolacs, resoles, bismaleimides, PMR resins, melamine-formaldehyde, urea-formaldehyde, benzocyclobutanes, hydroxymethylfurans, and isocyanates. In one embodiment of the invention the thermoset polymer substrate further comprises at least one thermoplastic polymer, such as, but not limited to, polyphenylene ether, polyphenylene sulfide, polysulfone, polyetherimide, or polyester. Said thermoplastic polymer is typically combined with thermoset monomer mixture before curing of said thermoset. Foamed substrates are also within the scope of the invention.

In one embodiment of the present invention a substrate layer (such as but not limited to a thermoplastic or thermoset substrate layer) also incorporates at least one filler and/or pigment. Illustrative extending and reinforcing fillers, and pigments include silicates, zeolites, titanium dioxide, stone powder, glass fibers or spheres, carbon fibers, carbon black, graphite, calcium carbonate, talc, mica, lithopone, zinc oxide, zirconium silicate, iron oxides, diatomaceous earth, calcium carbonate, magnesium oxide, chromic oxide, zirconium oxide, aluminum oxide, crushed quartz, calcined clay, talc, kaolin, asbestos, cellulose, wood flour, cork, cotton and synthetic textile fibers, especially reinforcing fillers such as glass fibers, carbon fibers, and metal fibers, as well as colorants such as metal flakes, glass flakes and beads, ceramic particles, other polymer particles, dyes and pigments which may be organic, inorganic or organometallic. In another embodiment the invention encompasses multilayer articles comprising a filled thermoset substrate layer such as a sheet-molding compound (SMC) or bulk molding compound (BMC).

The substrate layer may also comprise at least one cellulosic material including, but not limited to, wood, paper, cardboard, fiber board, particle board, plywood, construction paper, Kraft paper, cellulose nitrate, cellulose acetate butyrate, and like cellulosic-containing materials. The present invention also encompasses blends of at least one cellulosic material and either at least one thermoset polymer (particularly an adhesive thermoset polymer), or at least one thermoplastic polymer (particularly a recycled thermoplastic polymer, such as PET or polycarbonate), or a mixture of at least one thermoset polymer and at least one thermoplastic polymer.

Multilayer articles encompassed by the invention also include those comprising at least one glass layer. Typically, the glass layer is contiguous to the substrate layer and on the opposite side of the substrate as the top layer. Depending upon the nature of substrate and glass layers, at least one adhesive interlayer may be beneficially employed between any glass layer and any substrate layer of the composition of the invention. The adhesive interlayer may be transparent, opaque or translucent. For many applications it is preferred that the adhesive interlayer be optically transparent in nature and generally have a transmission of greater than about 60% and a haze value less than about 3% with no objectionable color.

Metal articles exposed to UV-light may exhibit tarnishing and other detrimental phenomena. In another embodiment the present invention encompasses multilayer articles comprising at least one metal layer as a supplemental layer. Representative metal layers include but are not limited to those comprising brass, aluminum, magnesium, chrome, iron, steel, copper, and other metals or alloys or articles containing them, which may require protection from UV-light or other weather phenomena. Typically, the metal layer is contiguous to the substrate layer and on the opposite side of the substrate as the top layer. Depending upon the nature of substrate layer and metal layer, at least one adhesive interlayer may be beneficially employed between any metal layer and any substrate layer of the composition of the invention. The adhesive interlayer may be transparent, opaque or translucent and/or may contain an additive, for example a colorant or decorative material such as metal flake. For many applications it is preferred that the interlayer be optically transparent in nature and generally have a transmission of greater than about 60% and a haze value less than about 3% with no objectionable color.

Within the present context a multilayer article is one which contains two or more layers. Multilayer articles of the invention include, but are not limited to, those which comprise a substrate layer and a top layer of the composition of the invention; those which comprise a substrate layer with a top layer of the composition of the invention on each side of said substrate layer; and those which comprise a substrate layer and at least one top layer of the composition of the invention with at least one interlayer between a substrate layer and a top layer. If desired, an overlayer may be included over the top layer of the composition of the invention, for example to provide abrasion or scratch resistance. The substrate layer, top layer of the composition of the invention, and any interlayers or overcoating layers are preferably in contiguous superposed contact with one another. Also, additional bottom layers can exist below the substrate layer.

Another aspect of the present invention is a method for preparing a multilayer article comprising providing a substrate layer including at least one white scattering pigment and optionally, at least one stable chromatic colorant, and applying at least one top layer to the substrate layer wherein the top layer includes at least one thermoplastic polymer having structural units derived from at least one 1,3-dihydroxybenzene and at least one organodicarboxylic acid, at least one unstable yellow colorant, and optionally, at least one stable chromatic colorant with the proviso that at least one layer includes the stable chromatic colorant.

Application of the at least one top layer may be performed by solvent-casting. More preferably, application of said top layer comprises fabrication of a separate sheet thereof followed by application to the second layer, or by simultaneous production of both layers, typically in a melt process. Thus, there may be employed such methods as co-injection molding, coextrusion, overmolding, blow molding, multi-shot injection molding and placement of a film of a top layer material on the surface of a second layer followed by adhesion of the two layers, typically in an injection molding apparatus; e.g., in-mold decoration, or in a hot-press. These operations may be conducted under art-recognized conditions.

It is also within the scope of the invention to apply a structure comprising a top layer and a second layer to a substrate layer, wherein the second layer is generally of a thermoplastic, thermoset, or cellulosic material similar or identical to that of the substrate layer but different from that of the top layer. This may be achieved, for example, by charging an injection mold with a structure comprising a top layer and a substrate layer and injecting the second layer material behind it. By this method, in-mold decoration and the like are possible. One side of the substrate layer may receive the other layers, though it is usually preferred to apply them to both sides of the substrate layer.

The thicknesses of the various layers in multilayer articles of this invention are most often as follows:
substrate - at least about 125µ (microns), preferably at least about 250µ, more preferably at least about 400µ, top - in the range of between about 2µ and about 2,500µ, preferably in the range of between about 10µ and about 250µ and most preferably in the range of between about 50µ and about 175µ, second material, if any - in the range of between about 2µ and about 2,500µ, preferably in the range of between about 10µ and about 250µ, and most preferably in the range of between about 50µ and about 175µ, total - at least about 125µ, preferably at least about 250µ, more preferably at least about 400µ.

The multilayer articles typically have outstanding initial gloss, improved initial color, weatherability as evidenced by improved resistance to ultraviolet radiation and maintenance of gloss, impact strength, high degree of light stability and resistance to organic solvents encountered in their final applications. Said articles may also be recyclable by reason of the compatibility of the discrete layers therein.

Representative multilayer articles which can be made which comprise the composition of the invention include aircraft, automotive, truck, military vehicle (including automotive, aircraft, and water-borne vehicles), and motorcycle exterior and interior components, including panels, quarter panels, rocker panels, trim, fenders, doors, decklids, trunklids, hoods, bonnets, roofs, bumpers, fascia, grilles, mirror housings, pillar appliques, cladding, body side moldings, wheel covers, hubcaps, door handles, spoilers, window frames, headlamp bezels, headlamps, tail lamps, tail lamp housings, tail lamp bezels, license plate enclosures, roof racks, and running boards; enclosures, housings, panels, and parts for outdoor vehicles and devices; enclosures for electrical and telecommunication devices; outdoor furniture; boats and marine equipment, including trim, enclosures, and housings; outboard motor housings; depth finder housings, personal water-craft; jet-skis; pools; spas; hot-tubs; steps; step coverings; building and construction applications such as glazing, roofs, windows, floors, decorative window furnishings or treatments; treated glass covers for pictures, paintings, posters, and like display items; optical lenses; ophthalmic lenses; corrective ophthalmic lenses; implantable ophthalmic lenses; wall panels, and doors; protected graphics; outdoor and indoor signs; enclosures, housings, panels, and parts for automatic teller machines (ATM); enclosures, housings, panels, and parts for lawn and garden tractors, lawn mowers, and tools, including lawn and garden tools; window and door trim; sports equipment and toys; enclosures, housings, panels, and parts for snowmobiles; recreational vehicle panels and components; playground equipment; articles made from plastic-wood combinations; golf course markers; utility pit covers; computer housings; desk-top computer housings; portable computer housings; lap-top computer housings; palm-held computer housings; monitor housings; printer housings; keyboards; FAX machine housings; copier housings; telephone housings; mobile phone housings; radio sender housings; radio receiver housings; light fixtures; lighting appliances; network interface device housings; transformer housings; air conditioner housings; cladding or seating for public transportation; cladding or seating for trains, subways, or buses; meter housings; antenna housings; cladding for satellite dishes; coated helmets and personal protective equipment; coated synthetic or natural textiles; coated photographic film and photographic prints; coated painted articles; coated dyed articles; coated fluorescent articles; coated foam articles; and like applications. The present invention further contemplates additional fabrication operations on said articles, such as, but not limited to, molding, in-mold decoration, baking in a paint oven, lamination, and/or thermoforming.

In order that those skilled in the art will be better able to practice the present disclosure, the following examples are given by way of illustration and not by way of limitation. In the following examples, ITR-PC (x/y) represents a block copolymer of resorcinol isophthalate/terephtalate and BPA polycarbonate in which the ratio of resorcinol arylate : polycarbonate is given by x/y.

### EXAMPLE 1

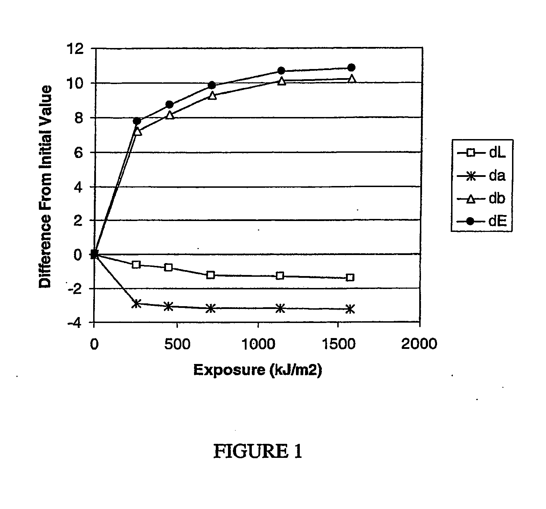

Laminated films were made using ITR-PC (70/30) as the top layer and polycarbonate as the substrate layer. The ITR-PC layer was 0.254 millimeters thick and the polycarbonate substrate layer was 3.2 millimeters thick. The polycarbonate substrate layer included 5% titanium dioxide white pigment. The multilayer article had an initial white color values L* = 94.1, a* = -0.5, and b* = 5.25 as measured by a Gregtagmacbeth 7000A Color Eye Color Spectrophotometer. The article was weathered in an Atlas Ci4000 xenon arc Weatherometer under the conditions listed in Table 1. After 1577 kJ/m² of exposure, the article had color values of L* = 92.7, a* = -3.7, and b* = 15.5 which lead to a color shift, ΔE, of 10.8 units demonstrating that a multilayer article that did not use the present invention had an unacceptable change in color. Figure 1 is a graphical representation of the change in L*, a*, b* and ΔE versus exposure for the article.

**Table 1**

| | |
|---|---|
| Parameter | Setting |
| Irradiance | 0.75 W/m²/nm @ 340 nm |
| Light period | 100% 0n |
| Dark/dry | N/A |
| Dark/spray | N/A |
| Light/spray | N/A |
| Black panel | 55°C |
| Dry bulb | 35°C |
| Relative humidity | 30% |
| Inner filter | CIRA |
| Outer filter | Soda lime |

### EXAMPLE 2

Laminated films were made using the polymers and layer thickness as described in Example 1. A colorant package was developed so that the color of the article would match as close as possible a standard automotive white color target with color values of L* = 88.4, a* = -0.6, and b* = 4.5 and be a "substantially constant color" with a ΔE shift less than 3 units upon accelerated weathering. The unstable yellow colorant was put into the substrate layer along with the 5% titanium dioxide white pigment. The colorant package formulation was developed and optimized using internal color match software which also could predict the weathering of materials. The colorant package formulation that was obtained and used is presented in Table 2. The multilayer article produced had initial white color values of L* = 83.8, a* = -0.6, and b* = 3.4 as measured by a Gregtagmacbeth 7000A Color Eye Color Spectrophotometer. The initial match of the color to the target automotive white had a ΔE of 4.7 with the majority of this due to the loss of lightness of 4.6 units. To improve the match of the lightness it would be necessary to reduce the concentration of the unstable yellow colorant and the red and violet stable colorants that absorb the light. However, this reduction in the unstable yellow compensation colorant would unsatisfactory lead an increase color shift of the article upon weathering.

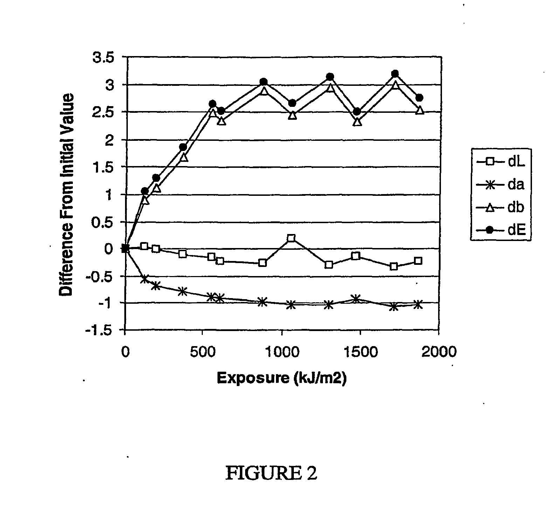

The article was weathered in an Atlas Ci4000 xenon arc Weatherometer under the conditions listed in Table 1. After 1866 kJ/m² of exposure, the article had color values of L* = 83.6, a* = -1.6, and b* = 6 which leads to a color shift, ΔE, of 2.8 units from the articles initial color values. With respect to the standard automotive white color target the color match had gone from a ΔE of 4.7 before accelerated weathering to a ΔE of 5.1 after 1866 kJ/m² of exposure. Figure 2 is a graphical representation of the change in L*, a*, b* and ΔE versus exposure for the article.

**Table 2**

| | |
|---|---|
| Top layer formulation - 0.254 millimeters thick | |
| ITR-PC(70/30) | 100 parts |
| UV3030 UV stabilizer | 5 parts |
| | |
| Substrate layer formulation - 3.2 millimeters | thick |
| Polycarbonate | 100 parts |
| PIG-WHT-6 | 5 parts |
| PIG-RED-101 | 0.027 parts |
| PIG-VLT-15 | 0.36 parts |
| SOL-YEL-72 | 0.00376 parts |

### EXAMPLE 3

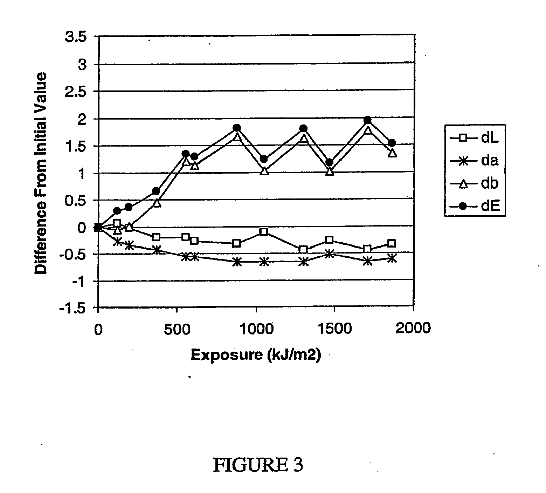

Laminated films were made using the polymers and layer thickness as described in Example 1. A colorant package was developed so that the color of the article would match as close as possible a standard automotive white color target with color values of L* = 88.4, a* = -0.6, and b* = 4.5 and be a "substantially constant color" with a ΔE shift less than 3 units upon accelerated weathering. The unstable yellow colorant was put into the top layer. The colorant package formulation was developed and optimized using internal color match software. The colorant package formulation that was obtained and used is presented in Table 3. The multilayer article produced had initial white color values of L* = 87.9, a* = -1.1, and b* = 4.1. The initial match of the color to the target automotive white had a ΔE of 0.8. The article was weathered in an Atlas Ci4000 xenon arc Weatherometer under the conditions listed in Table 1. After 1866 kJ/m² of exposure, the article had color values of L* = 87.5, a* = -1.7, and b* = 5.4 which lead to a color shift, ΔE, of 1.5 units from the articles initial color values. With respect to the standard automotive white color target the color match has gone from a ΔE of 0.8 before accelerated weathering to a ΔE of 1.6 after 1866 kJ/m² of exposure. Figure 3 is a graphical representation of the change in L*, a*, b* and ΔE versus exposure for the article.

**Table 3**

| | |
|---|---|
| Top layer formulation - 0.254 millimeters thick | |
| ITR-PC(70/30) | 100 parts |
| UV3030 UV stabilizer | 5 parts |
| PIG-VLT-15 | 0.139 parts |
| PIG-BLU-28 | 0.002 parts |
| SOL-YEL-72 | 0.0008 parts |
| | |
| Substrate layer formulation - 3.2 millimeters | thick |
| Polycarbonate | 100 parts |
| PIG-WHT-6 | 5 parts |

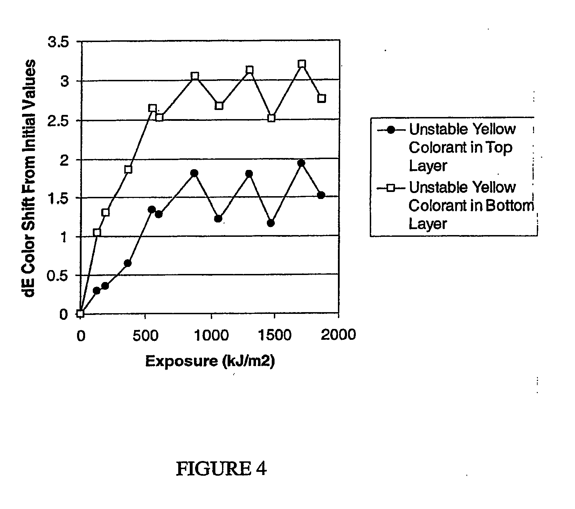

Figure 4 compares the change in ΔE versus exposure between Example 2, where the unstable yellow colorant was placed in the substrate layer, and Example 3 where the unstable yellow colorant was placed in the top layer. Figure 4 demonstrates notably that one can achieve a more stable white color by placing the unstable yellow colorant in the top layer.

The results show that the yellow colorant of the present invention must be separated from the white scattering layer in order to achieve stability as well as achieving high lightness and initial color match. When the yellow colorant was placed in the substrate layer, both ΔL and ΔE were substantially greater than when the yellow colorant was place in the top layer. Notably, the ΔE was below the standard (ΔE < 2) when the yellow colorant was in the top layer. Thus, the yellow colorant contained in the top layer in accordance with the composition of the present invention was effective in achieving a white with a lightness, L*, greater than 85 while maintaining the color shift, ΔE, below 2 units due to photoyellowing of the polymeric multilayer article.

Although preferred and other embodiments of the disclosure have been described herein, further embodiments may be perceived by those skilled in the art without departing from the scope of the disclosure as defined by the following claims.

## Claims

1. A multilayer article comprising:
a substrate layer including at least one white scattering pigment and optionally, at least one stable chromatic colorants, and
at least one top layer including at least one thermoplastic polymer comprising structural units derived from at least one 1,3-dihydroxybenzene and at least one organodicarboxylic acid, at least one yellow colorant selected from the group consisting of Solvent Yellow 72, 7,8-dimethylalloxazine and combinations thereof and optionally, at least one stable chromatic colorants with the proviso that at least one layer includes the stable chromatic colorant.

2. The multilayer article according to claim 1, wherein the white scattering pigment comprises titanium dioxide, barium sulfate, antimony oxide, calcium carbonate, zinc oxide, zinc sulfide, aluminum hydroxide, magnesium carbonate, mica, talc, quartz, or combinations thereof.

3. The multilayer article according to claim 1, wherein the white scattering pigment is present in a range between 0.1% and 10% by weight of the total weight of the substrate layer.

4. The multilayer article according to claim 1, wherein the substrate comprises at least one thermoplastic polymer or at least one thermoset polymer.

5. The multilayer article according to claim 5, wherein the thermoplastic polymer comprises a polycarbonate.

6. The multilayer article according to claim 1, wherein the at least one stable chromatic colorant is selected from the group consisting of Pigment Blue 15:1, Pigment Blue 15:4, Pigment Blue 28, Pigment Blue 29, Pigment Blue 36, Pigment Blue 60, Pigment Green 36, Pigment Green 50, Pigment Green 7, Pigment Violet 15, Pigment Yellow 138, Pigment Yellow 53, Pigment Yellow 183, Pigment Yellow 24, Solvent Blue 97, Solvent Green 28, Solvent Green 3, Solvent Orange 60, Pigment Red 101, Pigment Red 178, Pigment Red 181, Solvent Red 135, Solvent Red 169, Solvent Violet 13, Solvent Violet 36, Solvent Yellow 163, Solvent Yellow 93, Pigment Black 7, and combinations thereof.

7. A multilayer article according to claim 1:
wherein the substrate layer including carbonate structural units, titanium dioxide, and at least one stable chromatic colorant, and
wherein the at least one top layer including isophthalate/terephthalate structural units and at least one yellow colorant comprising Solvent Yellow 72, 7,8-dimethylalloxazine, or combinations thereof.

8. A method for preparing a multilayer article comprising:
providing a substrate layer including at least one white scattering pigment and optionally, at least one stable chromatic colorant, and
applying at least one top layer to the substrate layer wherein the top layer includes at least one thermoplastic polymer comprising structural units derived from at least one 1,3-dihydroxybenzene and at least one organodicarboxylic acid, at least one yellow colorant selected from the group consisting of Solvent Yellow 72, 7,8-dimethylalloxazine and combinations thereof, and optionally, at least one stable chromatic colorant with the proviso that at least one layer includes the chromatic colorant.

9. A method for preparing a multilayer article according to claim 8:
wherein the substrate layer includes carbonate structural units, titanium dioxide, and
at least one stable chromatic colorant, and
wherein the top layer includes isophthalate/terephthalate structural units, at least one yellow colorant comprising solvent yellow 72, 7,8-dimethyalloxazine or combinations thereof.

## Patentansprüche

1. Vielschichtiger Gegenstand, umfassend:
eine Substratschicht, umfassend mindestens ein weißes, streuendes Pigment und gegebenenfalls mindestens ein stabiles buntes Farbmittel, und
mindestens eine Deckschicht, umfassend mindestens ein thermoplastisches Polymer, das von mindestens einem 1,3-Dihydroxybenzol und einer Organodicarbonsäure abgeleitete Struktureinheiten umfasst, mindestens ein gelbes Farbmittel, ausgewählt aus der Gruppe bestehend aus Solvent Yellow 72, 7,8-Dimethylalloxazin und Kombinationen davon, und gegebenenfalls mindestens ein stabiles buntes Farbmittel, unter der Voraussetzung, dass mindestens eine Schicht das stabile bunte Farbmittel umfasst.

2. Vielschichtiger Gegenstand nach Anspruch 1, wobei das weiße, streuende Pigment Titandioxid, Bariumsulfat, Antimonoxid, Calciumcarbonat, Zinkoxid, Zinksulfid, Aluminiumhydroxid, Magnesiumcarbonat, Glimmer, Talkum, Quarz oder Kombinationen davon umfasst.

3. Vielschichtiger Gegenstand nach Anspruch 1, wobei das weiße, streuende Pigment in einem Bereich zwischen 0,1 Gew.-% und 10 Gew.-% des Gesamtgewichts der Substratschicht vorhanden ist.

4. Vielschichtiger Gegenstand nach Anspruch 1, wobei das Substrat mindestens ein thermoplastisches Polymer oder mindestens ein duroplastisches Polymer umfasst.

5. Vielschichtiger Gegenstand nach Anspruch 5, wobei das thermoplastische Polymer ein Polycarbonat umfasst.

6. Vielschichtiger Gegenstand nach Anspruch 1, wobei das mindestens eine stabile bunte Farbmittel ausgewählt aus der Gruppe bestehend aus Pigment Blue 15:1, Pigment Blue 15:4, Pigment Blue 28, Pigment Blue 29, Pigment Blue 36, Pigment Blue 60, Pigment Green 36, Pigment Green 50, Pigment Green 7, Pigment Violet 15, Pigment Yellow 138, Pigment Yellow 53, Pigment Yellow 183, Pigment Yellow 24, Solvent Blue 97, Solvent Green 28, Solvent Green 3, Solvent Orange 60, Pigment Red 101, Pigment Red 178, Pigment Red 181, Solvent Red 135, Solvent Red 169, Solvent Violet 13, Solvent Violet 36, Solvent Yellow 163, Solvent Yellow 93, Pigment Black 7 und Kombinationen davon.

7. Vielschichtiger Gegenstand nach Anspruch 1:
wobei die Substratschicht Carbonat-Struktureinheiten, Titandioxid und mindestes ein stabiles buntes Farbmittel umfasst, und
wobei die mindestens eine Deckschicht Isophthalat/Terephthalat-Struktureinheiten und mindestens ein gelbes Farbmittel umfasst, das Solvent Yellow 72, 7,8-Dimethylalloxazin oder Kombinationen davon umfasst.

8. Verfahren zur Herstellung eines vielschichtigen Gegenstands, umfassend:
Bereitstellen einer Substratschicht, umfassend mindestens ein weißes, streuendes Pigment und gegebenenfalls mindestens ein stabiles buntes Farbmittel, und
Aufbringen von mindestens einer Deckschicht auf die Substratschicht, wobei die Deckschicht mindestens ein thermoplastisches Polymer, das von mindestens einem 1,3-Dihydroxybenzol und einer Organodicarbonsäure abgeleitete Struktureinheiten umfasst, mindestens ein gelbes Farbmittel, ausgewählt aus der Gruppe bestehend aus Solvent Yellow 72, 7,8-Dimethylalloxazin und Kombinationen davon, und gegebenenfalls mindestens ein stabiles buntes Farbmittel umfasst, unter der Voraussetzung, dass mindestens eine Schicht das stabile bunte Farbmittel umfasst.

9. Verfahren zur Herstellung eines vielschichtigen Gegenstands nach Anspruch 8:
wobei die Substratschicht Carbonat-Struktureinheiten, Titandioxid und mindestens ein stabiles buntes Farbmittel umfasst, und
wobei die Deckschicht Isophthalat/Terephthalat-Struktureinheiten und mindestens ein gelbes Farbmittel umfasst, das Solvent Yellow 72, 7,8-Dimethylalloxazin oder Kombinationen davon umfasst.

## Revendications

1. Un article multicouche, comprenant :
une couche de substrat incluant au moins un pigment blanc à dispersion et, en option, au moins un colorant chromatique stable, et
au moins une couche de dessus incluant au moins un polymère thermoplastique comprenant des unités structurelles dérivées d'au moins un 1,3-dihydroxybenzène et au moins un acide organodicarboxylique, au moins un colorant jaune sélectionné dans le groupe composé de Solvent Yellow 72, 7,8-diméthylalloxazine et des combinaisons de ceux-ci et, en option, au moins un colorant chromatique stable, sachant qu'au moins une couche comprend le colorant chromatique stable.

2. L'article multicouche selon la revendication 1, dans lequel le pigment blanc à dispersion comprend du dioxyde de titane, du sulfate de baryum, de l'oxyde d'antimoine, du carbonate de calcium, de l'oxyde de zinc, du sulfure de zinc, de l'hydroxyde d'aluminium, du carbonate de magnésium, du mica, du talc, du quartz, ou des combinaisons de ceux-ci.

3. L'article multicouche selon la revendication 1, dans lequel le pigment blanc à dispersion est présent dans une fourchette comprise entre 0,1% et 10% en poids, du poids total de la couche de substrat.

4. L'article multicouche selon la revendication 1, dans lequel le substrat comprend au moins un polymère thermoplastique ou au moins un polymère thermodurcissable.

5. L'article multicouche selon la revendication 5, dans lequel le polymère thermoplastique comprend un polycarbonate.

6. L'article multicouche selon la revendication 1, dans lequel le au moins un colorant chromatique stable est sélectionné parmi le groupe composé de Pigment Blue 15:1, Pigment Blue 15:4, Pigment Blue 28, Pigment Blue 29, Pigment Blue 36, Pigment Blue 60, Pigment Green 36, Pigment Green 50, Pigment Green 7, Pigment Violet 15, Pigment Yellow 138, Pigment Yellow 53, Pigment Yellow 183, Pigment Yellow 24, Solvent Blue 97, Solvent Green 28, Solvent Green 3, Solvent Orange 60, Pigment Red 101, Pigment Red 178, Pigment Red 181, Solvent Red 135, Solvent Red 169, Solvent Violet 13, Solvent Violet 36, Solvent Yellow 136, Solvent Yellow 93, Pigment Black 7, et leurs combinaisons.

7. Un article multicouche selon la revendication 1 :
dans lequel la couche de substrat comprend des unités structurelles de carbonate, du dioxyde de titane et au moins un colorant chromatique stable, et
dans lequel la au moins une couche de dessus comprend des unités structurelles isophtalate/téréphtalate et au moins un colorant jaune comprenant du Solvent Yellow 72, 7,8-diméthylalloxazine, ou des combinaisons de ceux-ci.

8. Un procédé de préparation d'un article multicouche, comprenant :
la fourniture d'une couche de substrat incluant au moins un pigment blanc à dispersion et, en option, au moins un colorant chromatique stable, et
l'application au moins une couche de dessus à la couche de substrat, dans lequel la couche de dessus comprend au moins un polymère thermoplastique, comprenant des unités structurelles dérivées d'au moins un 1,3-dihydroxybenzène, et au moins un acide organodicarboxylique, au moins un colorant jaune sélectionné dans le groupe composé de Solvent Yellow 72, 7,8-diméthylalloxazine et des combinaisons de ceux-ci et, en option, au moins un colorant chromatique stable, sachant qu'au moins une couche comprend le colorant chromatique.

9. Un procédé de préparation d'un article multicouche selon la revendication 8 :
dans lequel la couche de substrat comprend des unités structurelles carbonate, du dioxyde de titane et au moins un colorant chromatique stable, et
dans lequel la couche de dessus comprend des unités structurelles isophtalate/téréphtalate, au moins un colorant jaune comprenant solvent yellow 72, 7,8-diméthylalloxazine ou les combinaisons de ceux-ci.
